# EUROPEAN PATENT APPLICATION

(11) **EP 4 498 460 A1**
(43) Date of publication of application: **29.01.2025**
(21) Application number: 22933281.2
(22) Date of filing: 22.03.2022
(51) Int. Cl.: H01M 8/12, H01M 8/2432, H01M 8/2465, H01M 8/249

(54) **SOLID OXIDE FUEL CELL AND METHOD FOR PRODUCING SOLID OXIDE FUEL CELL**

(71) Applicant: NISSAN MOTOR CO., LTD., Kanagawa 221-0023 (JP)
(72) Inventor: ICHIHARA, Keiji, Atsugi-shi, Kanagawa 243-0123 (JP)
(74) Representative: Grünecker Patent- und Rechtsanwälte PartG mbB
(86) International application number: PCT/JP2022/013316
(87) International publication number: WO 2023/181135

(57) **Abstract**

Provided is a solid oxide fuel cell having an open cathode structure. This solid oxide fuel cell is configured by stacking a plurality of power generating modules which is formed by stacking a plurality of cell units, and each power generating module includes a module end plate sealing a cathode reacting surface which is at least one end of a stacking direction. Further, the module end plate includes a bonding portion in which the power generating module adjacent in the stacking direction is bonded, along an outer perimeter edge.

## Description

### TECHNICAL FIELD

The present disclosure relates to a solid oxide fuel cell and a manufacturing method thereof.

### BACKGROUND ART

Fuel cells which operate at high temperatures, such as a solid oxide fuel cell (SOFC), have a problem of a power generating part being deformed during operation. For example, in the SOFC formed by stacking a plurality of power generating modules, there is a risk of a central power generating portion becoming concaved, and sealing performance in a gap between adjacent power generating modules may not be ensured.

A fuel cell stack in which a plurality of power generating modules, in which a plurality of unit cells are stacked, are stacked is disclosed in Japanese Patent Publication No. JP2014-93168A. In this fuel cell stack, a seal portion formed on a frame of a perimeter edge of the unit cell is arranged in a zigzag shape along a stacking direction, and by bending the perimeter edge of the unit cell, the perimeter edge of the unit cell corresponds to deformation of the stacking direction at the center of the unit cell. By doing so, sealing performance is ensured.

### SUMMARY OF INVENTION

In the fuel cell stack described in JP2014-93168A, since the seal portion is arranged in a zigzag shape, rigidity of the perimeter edge of the unit cell is low, and sufficient reaction force cannot be obtained even if a perimeter edge of the power generating module is pressed to seal a gap between the power generating modules. Therefore, even according to the technology described in JP2014-93168A, there is a risk that sealing performance in a gap between adjacent power generating modules may not be ensured.

The present disclosure takes the above problems into consideration and aims to provide a solid oxide fuel cell ensuring sealing performance in the gap between power generating modules.

According to an aspect of the present disclosure, a solid oxide fuel cell having an open cathode structure is provided. This solid oxide fuel cell is configured by stacking a plurality of power generating modules which is formed by stacking a plurality of cell units, and each power generating module includes a module end plate sealing a cathode reacting surface which is at least one end of a stacking direction. Further, the module end plate includes a bonding portion in which the power generating module adjacent in the stacking direction is bonded, along an outer perimeter edge.

### BRIEF DESCRIPTION OF DRAWINGS

FIG. 1 is an exploded perspective view of a solid oxide fuel cell according to a first embodiment of the present disclosure.
FIG 2 is an exploded perspective view of a power generating module.
FIG. 3 is an exploded perspective view of a cell unit.
FIG. 4 is a perspective view of a cell unit.
FIG. 5 is a side view of two adjacent power generating modules.
FIG. 6 is a top perspective view of a power generating module in a solid oxide fuel cell according to a second embodiment.
FIG. 7 is a bottom perspective view of the power generating module.
FIG. 8 is a drawing explaining rib fitting of two adjacent power generating modules.
FIG. 9 is a top perspective view of a power generating module in a solid oxide fuel cell according to a modification example of the second embodiment.
FIG. 10 is a top perspective view of a power generating module in a solid oxide fuel cell according to a third embodiment.
FIG. 11 is a schematic side view of a vicinity of a bonding portion of an adjacent power generating module in a solid oxide fuel cell according to a fourth embodiment.

### DESCRIPTION OF EMBODIMENTS

Hereinafter, embodiments of the present disclosure will be described with reference to the drawings and the like.

### [First embodiment]

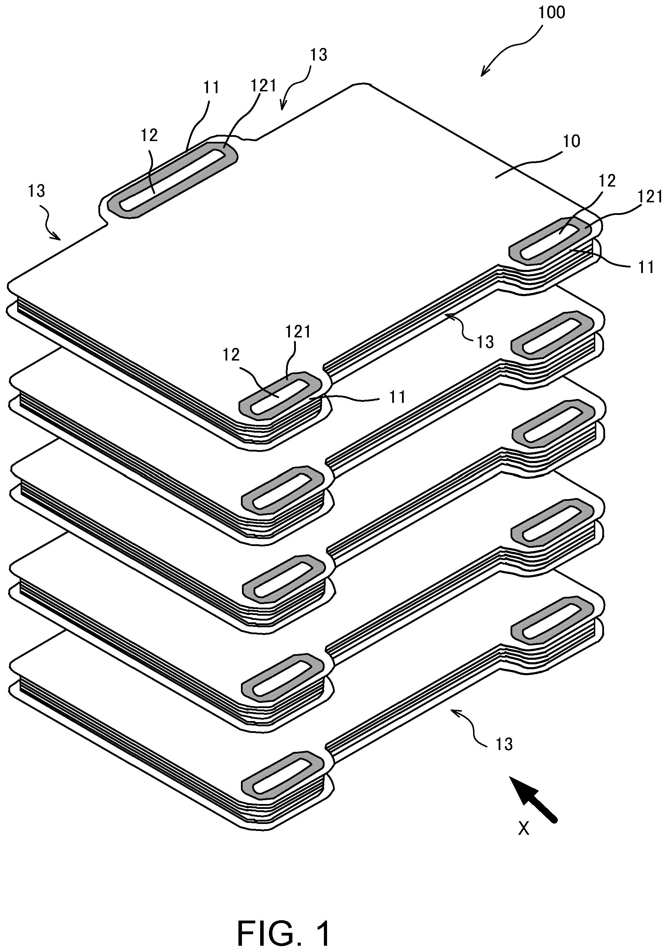

FIG. 1 is an exploded perspective view of a solid oxide fuel cell 100 (SOFC) (hereinafter also referred to as "fuel cell stack") according to the present embodiment. Further, the solid oxide fuel cell 100 of the present embodiment is mainly mounted on vehicles, etc., but is not limited thereto.

As shown in FIG. 1, the fuel cell stack 100 is configured by stacking a plurality of power generating modules 10. Further, in FIG. 1, the fuel cell stack 100 is configured by stacking five power generating modules 10, but the number of stacked power generating modules 10 is not limited thereto. Further, although not shown in the drawings, the fuel cell stack 100 includes a cover part covering the end plates in both ends of a stacking direction of the power generating module 10 and the entire stacked power generating modules 10.

Each power generating module 10 includes a plurality of convex portions 11 formed extending and protruding from an outer perimeter edge, and a manifold 12 is formed in the convex portion 11 which is a hole for fuel gas to flow through in the stacking direction. In the present embodiment, two convex portions 11 are included on one side of a length direction of the power generating module 10, and one convex portion 11 is included on the other side of the power generating module 10 but is not necessarily limited thereto. In the fuel cell stack 100, the power generating modules are stacked so that the manifold 12 of each power generating module 10 overlaps. Around the manifold 12, a manifold seal member 121 which seals a gap between the overlapping manifolds 12 is disposed.

On the other hand, cathode gas flowing in the stacking direction of the power generating module 10 passes through a space formed between a concave portion 13 corresponding to the convex portion 11 and the cover part covering the entire power generating modules 10.

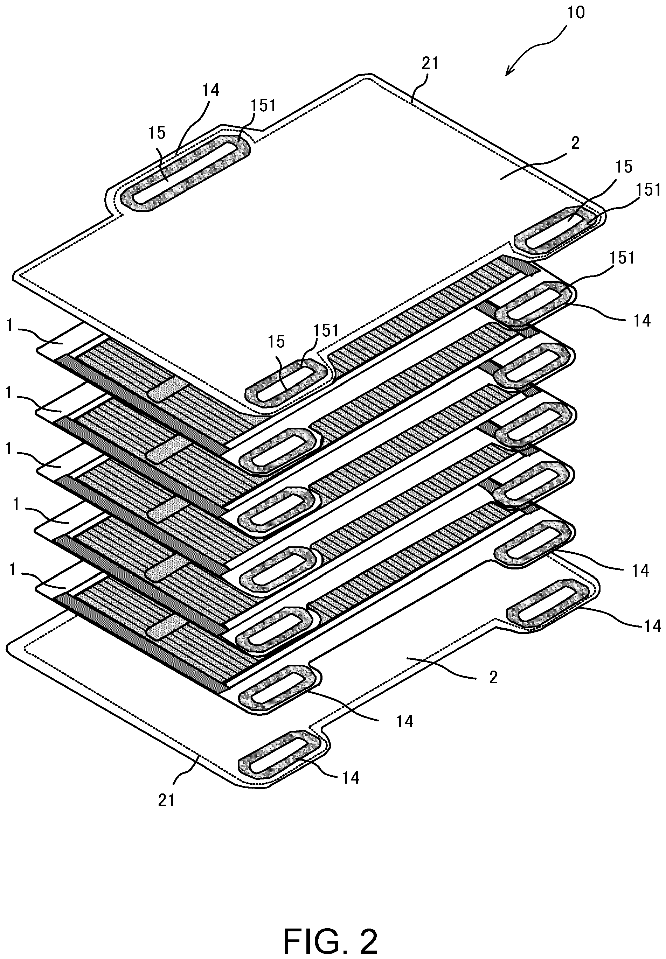

FIG. 2 is an exploded perspective view of the power generating module 10. As shown in FIG. 2, the power generating module 10 is configured by stacking a plurality of cell units 1. In each cell unit 1, one side becomes a cathode reacting surface which reacts with the cathode gas (air), and the other side becomes an anode reacting surface which reacts with an anode gas (fuel gas). In this embodiment, an upper surface side of the cell unit 1 is the anode reacting surface, and a lower surface side is the cathode reacting surface.

Further, the power generating module 10 includes module end plates 2 at both ends of the stacking direction of the cell unit 1. The module end plate 2 of one end in the stacking direction of the cell unit 1 (upper part of the power generating module 10) seals the cathode reacting surface of one end in the stacking direction of the cell unit 1 (upper cell unit 1 in the stacking direction). The module end plate 2 of the other end in the stacking direction of the cell unit 1 (lower part of the power generating module 10) seals the anode reacting surface of the other end in the stacking direction of the cell unit 1 (lower cell unit 1 in the stacking direction).

The module end plate 2 includes a bonding portion 21 in which the power generating module 10 adjacent in the stacking direction is bonded, along an outer perimeter edge. The module end plates 2 of the adjacent power generating module 10 are bonded by the bonding portion 21 of the outer perimeter edge.

Further, as shown in FIG. 2, each of the cell unit 1 and the module end plate 2 has a plurality of convex portions 14 forming the convex portion 11 of the power generating module 10 when stacked, extending from the outer perimeter edge. A through hole portion 15 is formed in the convex portion 14, and when the plurality of cell units 1 are stacked, the through hole portion 15 overlaps each other to form the manifold 12 of the power generating module 10. Around the through hole portion 15, an anode seal member 151 is provided to seal a gap between the overlapping through hole portions 15.

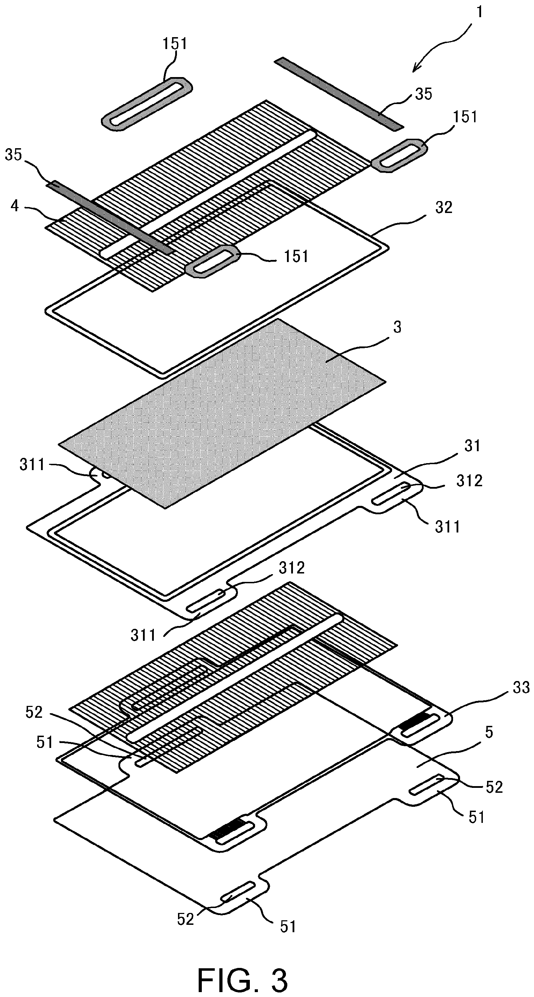

FIG. 3 is an exploded perspective view of the cell unit 1.

As shown in FIG. 3, the cell unit 1 includes a power generating cell 3, a cell frame 31 surrounding an outer perimeter of the power generating cell 3, a cell seal member 32, a channel flow path 4, a separator 5, an anode spacer 33, the anode seal member 151, a cathode spacer 35, etc.

The power generating cell 3 is configured by a membrane electrode assembly in which an anode electrode is disposed on one side of a solid electrolyte layer, and a cathode electrode is disposed on the other side of the solid electrolyte layer. In the present disclosure, a lower surface side of the power generating cell 3 is the anode electrode, and an upper surface side of the power generating cell 3 is the cathode electrode. The anode gas (fuel gas) and the cathode gas (air) are supplied to the power generating cell 3, and the power generating cell 3 generates power based on electrode reactions at the anode electrode and the cathode electrode. Further, the power generating cell 3 may also be configured to include a support layer supporting the anode electrode and/or the cathode electrode.

The cell frame 31 is a frame body that fixes the power generating cell 3 and is disposed to surround the outer perimeter of the power generating cell 3. The cell frame 31 includes a plurality of convex portions 311 formed extending and protruding from the outer perimeter edge, and a hole portion 312 is formed in the convex portion 311.

The cell seal member 32 is disposed to surround the outer perimeter of the power generating cell 3, and seals a gap between the power generating cell 3 and the cell frame 31.

The channel flow paths 4 are formed of a conductive material such as metal and are disposed in a gap between both sides of the power generating cell 3 and the separator 5 described later, respectively. The channel flow path 4 is a member forming an anode flow path on one side of the power generating cell 3 and a cathode flow path on the other side of the power generating cell 3. The channel flow path 4 is formed in a so-called waved shape, in which irregularities formed extending straight in a width direction of the power generating cell 3 are repeatedly formed in a length direction. As a result, a plurality of anode flow paths is sectioned in a gap between one side of the power generating cell 3 and the separator 5, and the cathode flow path is sectioned in a gap between the other side of the power generating cell 3 (of an adjacent cell unit 1) and the separator 5. In the present embodiment, the anode flow path is formed on the lower surface side of the power generating cell 3, and the cathode flow path is formed on the upper surface side of the power generating cell 3.

The separator 5 is a conductive plate shaped member, and one side is conductively bonded to the channel flow path 4. As a result, the separator 5 and the power generating cell 3 are electrically connected through the channel flow path 4. Further, the other side of the separator 5 is bonded to the channel flow path 4 of the adjacent cell unit 1.

Further, the separator 5 includes a plurality of convex portions 51 formed extending and protruding from an outer perimeter edge at a position corresponding to the convex portion 311 of the cell frame 31. In the convex portion 51, a hole portion 52 is formed at a position corresponding to the hole portion 312 of the cell frame 31. The through hole portion 15 of the cell unit 1 (FIG. 2) is formed by overlapping the hole portion 52 of the separator 5 and the hole portion 312 of the cell frame 31. As described above, the anode seal member 151 is disposed around the through hole portion 15.

The anode spacer 33 is a frame body stacked on the outer perimeter of the separator 5, and the anode spacer 33 is disposed in a gap between the cell frame 31 and the separator 5 to ensure the height of the anode flow path. The anode spacer 33 is disposed so that its outer shape overlaps with the cell frame 31 and the separator 5.

The cathode spacers 35 are disposed at both ends of a length direction of the channel flow path 4 on the cathode side and seal both ends of the channel flow path 4, in addition to ensuring the height of the cathode flow path.

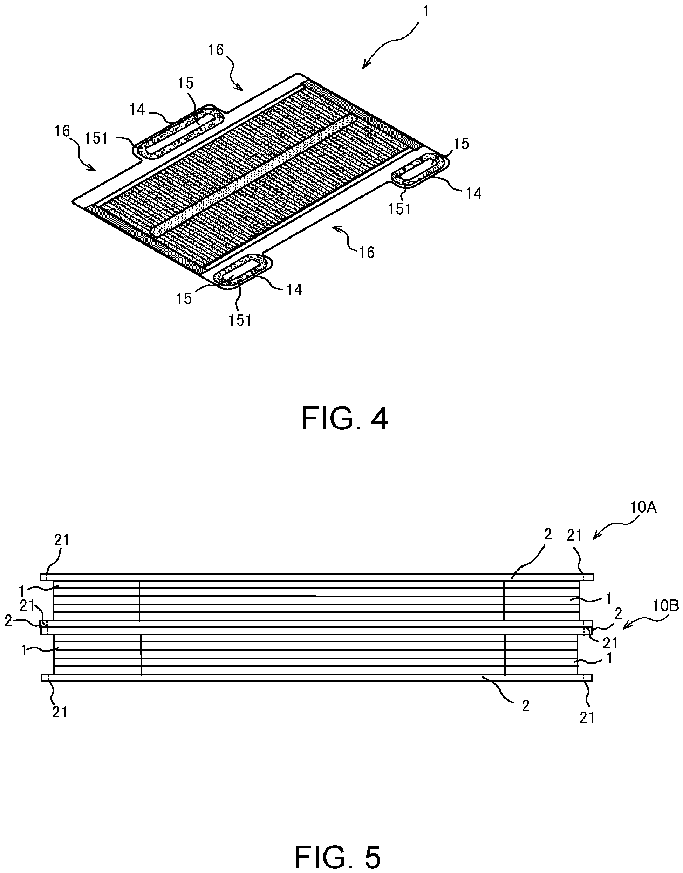

FIG. 4 is a perspective view of an assembled cell unit 1.

As shown in FIG. 4, the cell unit 1 includes the through hole portion 15 configuring the manifold 12 in which the fuel gas flows in the convex portion 14. The through hole portion 15 in a gap between the cell units 1 is sealed by the anode seal member 151.

On the other hand, in the cell unit 1, the cathode gas flowing in the stacking direction passes through a space formed between a concave portion 16 corresponding to the convex portion 14, and the cover part covering the entire power generating modules 10. When the plurality of cell units 1 are stacked, the concave portion 16 overlaps each other to form the concave portion 13 which is a flow path for cathode gas flowing in the stacking direction (FIG. 1). That is, the fuel cell stack 100 has an open cathode structure in which the flow path for the cathode gas flowing in the stacking direction is formed by the cover part, rather than forming inside the cell unit 1.

However, since a solid oxide fuel cell (SOFC) operates at high temperatures, in the SOFC configured by stacking the plurality of power generating modules, there is a risk of a central power generating portion of the power generating modules becoming concaved during operation, and sealing performance between adjacent power generating modules may not be ensured.

In contrast, in the solid oxide fuel cell 100 of the present embodiment, the power generating module 10 includes the module end plate 2 at both ends of the stacking direction of the cell unit 1, and the outer perimeter edges of the module end plates 2 of the adjacent power generating module 10 are bonded by the bonding portion 21. Therefore, even if the center of the power generating module 10 is deformed, the sealing performance in a gap between the power generating module 10 is secured because the bonding portion 21 is set to be a segment of the deformation.

Hereinafter, details of bonding between module end plates 2 of the adjacent power generating module 10 will be described.

FIG. 5 is a side view of two power generating modules 10 adjacent in the stacking direction, and is a view seen from an X direction of FIG. 1. Here, the power generating module above the stacking direction is a power generating module 10A, and the power generating module below the stacking direction is a power generating module 10B.

As shown in FIG. 5, the module end plates 2 are installed in both ends of the stacking direction of a plurality of stacked cell units 1, and seal the anode reacting surface and cathode reacting surface of an end portion of the stacking direction of the cell units 1.

Further, as shown in FIG. 5, the module end plate 2 is formed to be larger than the outer shape of the cell unit 1 configuring the power generating module 10 when viewed from above. In the module end plate 2, the bonding portion 21 is formed along the outer perimeter edge of the module end plate 2 at a position offset in the outer perimeter direction with respect to the cell unit 1. Further, a module end plate 2A sealing the anode reacting surface on a lower part of the power generating module 10A and a module end plate 2B sealing the cathode reacting surface on an upper part of the power generating module 10B are bonded to each other's bonding portions 21 by a conductive bond such as welding.

As such, in the bonding portion 21 along a perimeter edge portion of the module end plate 2, the adjacent power generating modules 10 are bonded with each other. Therefore, even if the center portion of the power generating module 10 is deformed, the airtightness (the sealing performance) in the gap between the power generating modules 10 is ensured because the bonding portion 21 is formed as the segment of the deformation.

Furthermore, since the adjacent power generating modules 10 are bonded by a conductive bond, conductivity in the gap between the power generating modules 10 is secured. That is, the airtightness and the conductivity in the gap between the power generating modules 10 can be ensured at the same time.

Furthermore, since the bonding portion 21 bonding the adjacent power generating modules 10 is formed at a position offset in the outer perimeter direction with respect to the cell unit 1, the internal parts of the power generating module 10 (such as parts configuring the cell unit 1) are not applied with a load when bonding the adjacent power generating modules 10. Therefore, a better contact can be formed in the gap between the power generating modules 10 because a load for bonding can be applied on the bonding portion 21 without considering the load on the internal parts of the power generating module 10.

Further, if a fuel cell stack has a closed cathode structure sealing a flow path of cathode gas flowing in the stacking direction within a cell unit, there is a concern that sealing both ends of the stacking direction of the cell unit with a module end plate will not provide sufficient sealing of anode gas because the interior of power generating modules will not be accessible. In contrast, since the present embodiment adopts the open cathode structure, the interior of the power generating module 10 can be accessed even after the module end plates 2 have been bonded, allowing the anode flow path to be sealed.

According to the solid oxide fuel cell 100 of the first embodiment described above, the following effects can be obtained.

The solid oxide fuel cell 100, wherein the power generating module 10 includes the module end plates 2 at both ends of the stacking direction of the cell unit 1, and the module end plate 2 includes the bonding portion 21 in which the power generating module 10 adjacent in the stacking direction is bonded, along the outer perimeter edge. Further, the power generating modules 10 adjacent in the stacking direction are bonded by bonding of the outer perimeter edges of the module end plates 2 at the bonding portion 21. Therefore, during operation of the solid oxide fuel cell 100, even if the center portion of the power generating module 10 is deformed, the sealing performance (the airtightness) in the gap between the power generating modules 10 is ensured because the bonding portion 21 is formed as the segment of the deformation.

In the solid oxide fuel cell 100, each power generating module 10 is bonded to the adjacent power generating module 10 in the stacking direction by a conductive bond at the bonding portion 21 formed according to the outer perimeter edge of the power generating module 10. As a result, the conductivity in the gap between the power generating modules 10 is ensured in addition to ensuring the sealing performance (the airtightness) in the gap between the power generating modules 10. That is, the airtightness and the conductivity in the gap between the power generating modules 10 can be ensured at the same time.

The solid oxide fuel cell 100, wherein the module end plate 2 is formed to be larger than the outer shape of the cell unit 1 configuring the power generating module 10 when viewed from above, and the bonding portion 21 of the module end plate 2 is formed at the position offset in the outer perimeter direction with respect to the cell unit 1. As a result, the internal parts of the power generating module 10 (such as parts configuring the cell unit 1) are not applied with a load when bonding the adjacent power generating modules 10. Therefore, a better contact can be formed in the gap between the power generating modules 10 because a load for bonding can be applied on the bonding portion 21 without considering the load on the internal parts of the power generating module 10. Therefore, the power generating performance of the solid oxide fuel cell 100 is improved.

Further, in the present embodiment, the gap between the power generating modules 10 is bonded by welding, but it is not limited thereto and may be bonded by, for example, soldering, etc. Further, it is preferable to bond the gap between the power generating modules 10 by a conductive bond, but is not necessarily limited thereto, and the gap between the power generating modules 10 may be bonded by a non-conductive bond such as a glass or ceramic adhesive. If the power generating module 10 is deformed into a curve, the module end plates 2 of the adjacent power generating modules 10 on an outside of the bonding portion 21 are in contact with each other, so even in the case of using a non-conductive bond, the conductivity in the gap between the power generating modules 10 can be ensured.

Further, in the present embodiment was provided the configuration in which the module end plates 2 are included at both ends in the stacking direction of the cell unit 1, but is not necessarily limited thereto. The configuration may be provided with the module end plate 2 only included in the cathode reacting surface side which is one end in the stacking direction of the cell unit 1. In this case, the bonding portion 21 of the module end plate 2, which seals the cathode reacting surface, is bonded to the anode reacting surface of the other end of the stacking direction of the cell unit 1 of the adjacent power generating module 10. That is, one module end plate 2 is shared as an end plate that seals the cathode reacting surface and the anode reacting surface.

Further, as in the present embodiment, it is preferable that the bonding portion 21 of the module end plate 2 is formed at the position offset in the outer perimeter direction with respect to the cell unit 1, but is not necessarily limited thereto. Even in the case of the bonding portion 21 being formed at a position that overlaps with the cell unit 1, if the bonding portion 21 is formed along the outer perimeter edge of the module end plate 2, the sealing performance (the airtightness) in the gap between the power generating modules 10 is secured because the bonding portion 21 is set to be the segment of the deformation.

### [Second embodiment]

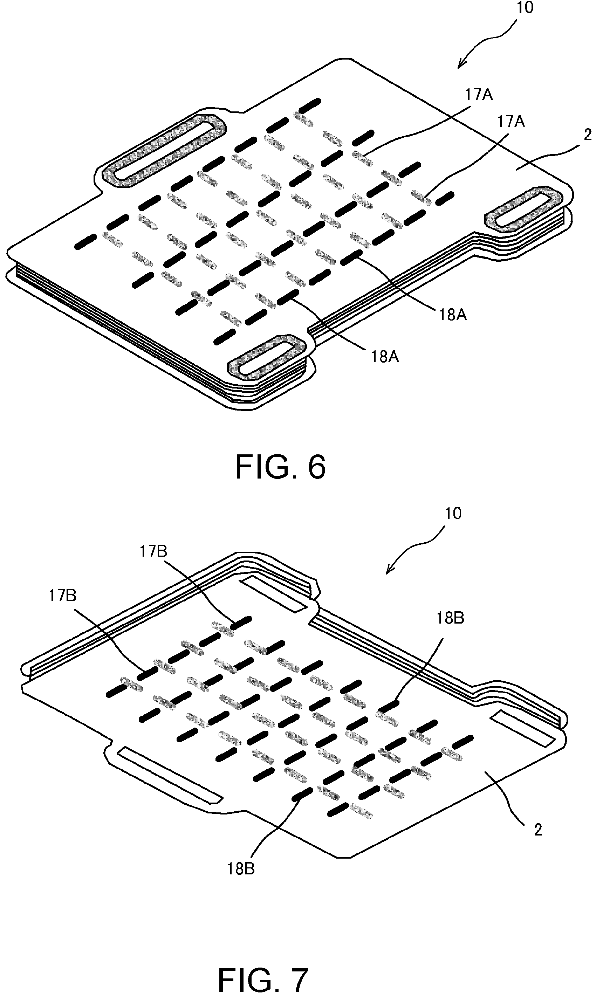

Referring to FIGS. 6 to 8, a solid oxide fuel cell 100 according to a second embodiment will be described. The present embodiment is different from the first embodiment in that adjacent power generating modules 10 are rib fitted to each other. Further, the same elements as in the first embodiment are given the same reference signs, and their descriptions are omitted.

FIG. 6 is a perspective view of a power generating module 10 viewed from the top, and FIG. 7 is a perspective view of the power generating module 10 viewed from the bottom. Further, FIGS. 6 and 7 are drawings of the plurality of power generating modules 10 before they are bonded.

As shown in FIGS. 6 and 7, the power generating module 10 includes a rib 17A protruding from an upper surface of a module end plate 2 at an upper part of a stacking direction of a cell unit 1, and a rib 17B protruding from a lower surface the module end plate 2 at a lower part of the stacking direction, in a direction nearly perpendicular to the rib 17A.

Further, in the upper surface of the module end plate 2 at the upper part of the stacking direction of the cell unit 1, the power generating module 10 has a fitting portion 18A formed, which is a groove for the corresponding rib 17B to be fitted, in a position corresponding to the rib 17B protruding from the lower part of the power generating module 10 adjacent in the stacking direction (upward direction). On the other hand, in the lower surface of the module end plate 2 at the lower part of the stacking direction, the power generating module 10 has a fitting portion 18B formed, which is a groove for the corresponding rib 17A to be fitted, in a position corresponding to the rib 17A protruding from the upper part of the power generating module 10 adjacent in the stacking direction (downward direction). As a result, when the power generating modules 10 are stacked, the rib 17A on the upper part of the power generating module 10 is fit into the fitting portion 18B on the lower part of the power generating module 10, and the rib 17B on the lower part of the power generating module 10 is fit into the fitting portion 18A the upper part of the power generating module 10.

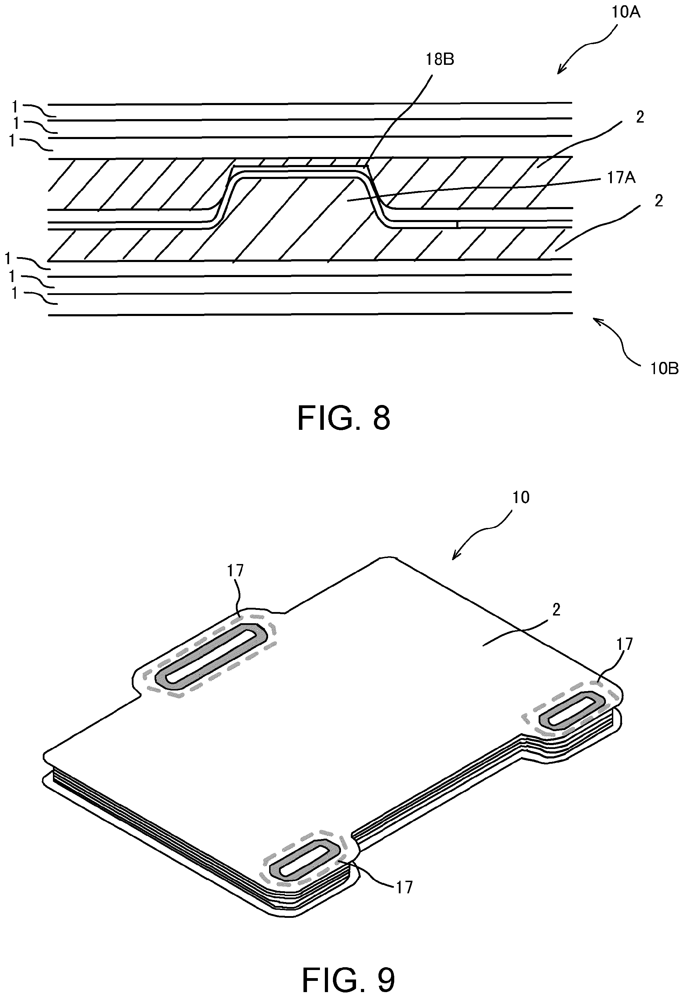

FIG. 8 is an enlarged cross-sectional view of a portion of rib fitting in a gap between adjacent power generating modules 10.

As shown in FIG. 8, in the power generating module 10A and the power generating module 10B adjacent in the stacking direction, the rib 17A protruding from the upper part of the power generating module 10B is fit into the fitting portion 18B formed on the lower part of the power generating module 10A. Also, FIG. 8 is a cross-sectional view of the portion where the rib 17A of the power generating module 10B is fitted into the fitting portion 18B of the power generating module 10A. Similarly, the rib 17B protruding from the lower part of the power generating module 10A is fit into the fitting portion 18B formed on the upper part of the power generating module 10B.

As such, displacement in a planar direction of the solid oxide fuel cell 100 (fuel cell stack) is suppressed because the adjacent power generating modules 10 are rib fitted to each other. As a result, vibration resistance of the solid oxide fuel cell 100 (fuel cell stack) is improved.

Further, in FIGS. 6 and 7, the plurality of ribs 17B are formed extending in a length direction of the power generating module 10 at the lower surface of the module end plate 2 on the lower part of the stacking direction, and the rib 17A is formed on the upper surface of the module end plate 2 at the upper part of the stacking direction, in a direction nearly perpendicular to the rib 17B, but is not necessarily limited thereto. The position or the number of rib 17A formed in the module end plate 2 can be arbitrarily determined. Further, the fitting portion 18 may be disposed at a position corresponding to the rib 17.

### [Modification example of the second embodiment]

Referring to FIG. 9, a solid oxide fuel cell 100 according to a modification example of the second embodiment will be described. Further, the same elements as in other embodiments are given the same reference signs, and their descriptions are omitted.

FIG. 9 is a perspective view of a power generating module 10 viewed from the top. Further, FIG. 9 is a drawing of the plurality of power generating modules 10 before they are bonded.

As shown in FIG. 9, in the present modification example, in the power generating module 10, a rib 17 formed on an upper surface of a module end plate 2 at an upper part of a stacking direction, is formed around a manifold 12 in which fuel gas flows in the stacking direction. Further, although not shown in the drawings, in the lower surface of the module end plate 2 at the lower part of the stacking direction, the power generating module 10 has a fitting portion formed, which is a groove for the corresponding rib 17 to be fitted, in a position corresponding to the rib 17 of the power generating module 10 adjacent in the stacking direction (downward direction). Accordingly, when the power generating modules 10 are stacked, in the power generating modules 10 adjacent in the stacking direction, the rib 17 on the upper part of the power generating module 10 and the fitting portion of the lower part of the power generating module 10 are fitted. As a result, displacement in a planar direction of the solid oxide fuel cell 100 (fuel cell stack) is suppressed, and vibration resistance of the solid oxide fuel cell 100 (fuel cell stack) is improved.

Further, the rib 17 fitted into the fitting portion is formed around the manifold 12, a case of the fuel gas flowing in the planar direction in a gap between the adjacent power generating modules 10 is suppressed. That is, the airtightness of the manifold 12 is improved, and the power generating performance of the solid oxide fuel cell 100 is improved.

### [Third embodiment]

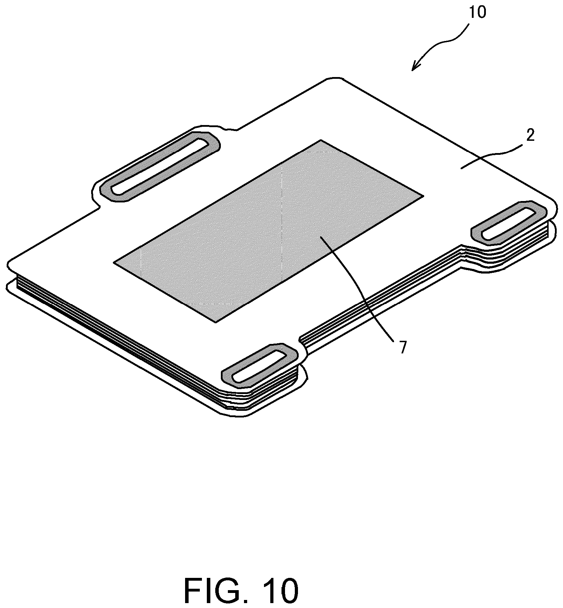

Referring to FIG. 10, a solid oxide fuel cell 100 according to a third embodiment will be described. Further, the same elements as in other embodiments are given the same reference signs, and their descriptions are omitted.

FIG. 10 is a perspective view of a power generating module 10 viewed from the top. Further, FIG. 10 is a drawing of the plurality of power generating modules 10 before they are bonded.

The present embodiment is different from other embodiments in that the power generating module 10 includes a high thermal conductivity layer 7.

As shown in FIG. 10, the power generating module 10 includes the high thermal conductivity layer 7 at a center portion of a module end plate 2 at an upper part of a stacking direction of a cell unit 1. The high thermal conductivity layer 7 is configured of materials having high thermal conductivity, for example, graphite or metals such as silver, copper, aluminum, nickel, or ferritic stainless steel. As a result, thermal conductivity in a plane direction in a power generating portion of the power generating module 10 is improved, and the power generating performance of the solid oxide fuel cell 100 is improved.

Further, as in the present embodiment, it is preferable for the high thermal conductivity layer 7 to be disposed at the center portion of the module end plate 2, but is not necessarily limited thereto, and may be disposed at any position on the module end plate 2.

### [Fourth embodiment]

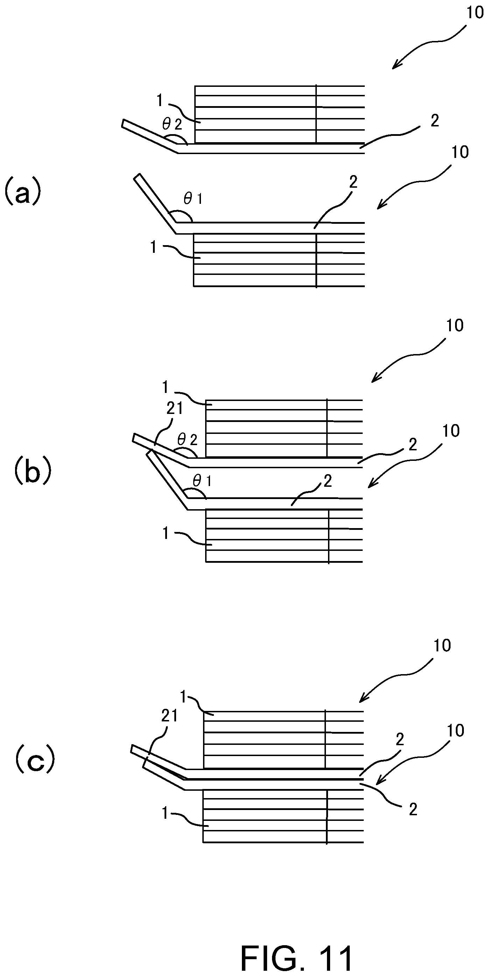

Referring to FIG. 11, a solid oxide fuel cell 100 according to a fourth embodiment will be described. Further, the same elements as in other embodiments are given the same reference signs, and their descriptions are omitted.

FIG. 11 is a schematic side view of a vicinity of a bonding portion of an adjacent power generating module, and is a drawing explaining a stacking process of the power generating module 10 adjacent in a stacking direction. FIG. 11A is a drawing of the adjacent power generating module 10 before it is stacked, FIG. 11B is a drawing of the adjacent power generating module 10 when stacking, and FIG. 11C is a drawing of the adjacent power generating module 10 after stacking has been completed. Also, in FIG. 11, the stacking process of two adjacent power generating modules 10 is illustrated for convenience, but the plurality of power generating modules 10 being stacked may each have a configuration shown in FIG. 11.

As shown in FIG. 11A, an end portion of a length direction of a module end plate 2 of the power generating module 10 is bend-formed. That is, the module end plate 2 includes a flat portion 22 which is a flat part, and a bending portion 23 which is bend-formed. Here, in each power generating module 10, a bending angle (θ1) of the bend-forming of the module end plate 2 in an upper part of a stacking direction of a cell unit 1, is smaller than a bending angle (θ2) of the bend-forming of the module end plate 2 in a lower part of the stacking direction of the cell unit 1. As a result, as shown in FIG. 11B, between module end plates 2 of the power generating modules 10 adjacent when stacking the power generating modules 10, the bending portion 23 is in contact before the flat portion 22 Here, between the module end plates 2 of the adjacent power generating modules 10, a position of a first contact during stacking is bonded (welded) in the bending portion 23. That is, when stacking, a bonding portion 21 is formed at the position of the first contact.

As shown in FIG. 11C, upon completion of stacking of the power generating modules 10, the module end plates 2 of the adjacent power generating modules 10 are at least in contact at the bonding portion 21.

As such, the power generating modules 10 are stacked after bending processing so that the bending angle (θ1) of the module end plate 2 in the upper part of the stacking direction becomes smaller than the bending angle (θ2) of the module end plate 2 in the lower part of the stacking direction and accordingly, the end portion of a length direction comes in contact first when stacking the power generating module 10. Further, at the position of the first contact, by bonding (welding) the module end plates 2 of the adjacent power generating modules 10, the adjacent power generating modules 10 are bonded at least at the end portion of the module end plate 2. Therefore, the bond between the power generating modules 10 is more certainly ensured, and the conductivity in a gap between the power generating modules 10 is improved. That is, the power generating performance of the solid oxide fuel cell 100 is improved.

Embodiments of the present disclosure were described above, but the above embodiments are merely examples of applications of the present disclosure, and the technical scope of the present disclosure is not limited to the specific constitutions of the above embodiments.

Each of the foregoing embodiments is described as a stand-alone embodiment, but may be combined as appropriate.

## Claims

1. A solid oxide fuel cell having an open cathode structure, configured by stacking a plurality of power generating modules which is configured by stacking a plurality of cell units,
wherein each power generating module comprises a module end plate sealing a cathode reacting surface which is at least one end of a stacking direction, and
wherein the module end plate comprises a bonding portion in which the power generating module adjacent in the stacking direction is bonded, along an outer perimeter edge.

2. The solid oxide fuel cell of claim 1, wherein each power generating module is bonded by a conductive bond to the power generating module adjacent to the stacking direction in the bonding portion.

3. The solid oxide fuel cell of claim 2, wherein each power generating module comprises module end plates at both ends, and outer perimeter edges of the module end plates of the adjacent power generating modules are bonded by the bonding portion.

4. The solid oxide fuel cell of claim 3, wherein the module end plate is formed to be larger than an outer shape of the cell unit configuring the power generating module when viewed from above, and
the bonding portion of the module end plate is formed at a position offset in an outer perimeter direction with respect to the cell unit.

5. The solid oxide fuel cell of claim 3, wherein a rib is formed protruding from the module end plate of one power generating module of the adjacent power generating modules, and
a fitting portion is formed at the module end plate of the other power generating module to fit with the rib.

6. The solid oxide fuel cell of claim 5, wherein the power generating module comprises a manifold in which fuel gas flows towards a stacking direction, and
the rib is formed around the manifold.

7. The solid oxide fuel cell of any one of claims 1 to 6, wherein each power generating module comprises a high thermal conductivity layer having a high thermal conductivity in a gap between the power generating module adjacent in the stacking direction.

8. A manufacturing method of a solid oxide fuel cell having an open cathode structure, comprising:
a step of configuring a power generating module by sealing a cathode reacting surface which is at least one end of a stacking direction with a module end plate in addition to stacking a plurality of cell units,
a step of stacking a plurality of the power generating modules, and
a step of configuring the solid oxide fuel cell by bonding power generating modules adjacent in the stacking direction with respect to an outer perimeter edge of the module end plate with each power generating module.

9. The manufacturing method of the solid oxide fuel cell of claim 8,
wherein the power generating module is configured by sealing both ends in the stacking direction with the module end plates in addition to stacking the plurality of cell units,
an end portion of a length direction of the module end plate is bend-formed,
the solid oxide fuel cell is configured by stacking the plurality of power generating modules comprising the bend-formed module end plate,
wherein a bending angle of the bend-forming in the module end plate in an upper part of the stacking direction is smaller than that of the module end plate in a lower part of the stacking direction.
